(19) Europäisches Patentamt
European Patent Office
Office européen des brevets

(11) **EP 4 675 549 A1**

(12) **EUROPEAN PATENT APPLICATION**

(43) Date of publication:
**07.01.2026 Bulletin 2026/02**

(21) Application number: 24186619.3

(22) Date of filing: **04.07.2024**

(51) International Patent Classification (IPC):
**G06T 3/4053** (2024.01)

(52) Cooperative Patent Classification (CPC):
**G06T 3/4061; G06T 11/006;** G06T 2211/408

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Koninklijke Philips N.V.
5656 AG Eindhoven (NL)**

(72) Inventors:
• **BONTUS, Claas
Eindhoven (NL)**

• **DAERR, Heiner
Eindhoven (NL)**
• **THRAN, Axel
5656AG Eindhoven (NL)**
• **WIEGERT, Jens
Eindhoven (NL)**
• **BRENDEL, Bernhard Johannes
Eindhoven (NL)**

(74) Representative: **Philips Intellectual Property &
Standards
High Tech Campus 52
5656 AG Eindhoven (NL)**

(54) **CT IMAGING**

(57)    The invention provides methods and systems pertaining to a method for recovering resolution of spectral base images acquired using spectral CT imaging techniques. In particular, embodiments aim to provide a method for generating a resolution recovered spectral base image of a field of view of a third resolution based on a low-resolution spectral base image of the field of view of a first resolution and a high resolution CT image of the field of view of a second resolution, where the first resolution is lower than the second and third resolutions.

FIG. 1

**Description**

FIELD OF THE INVENTION

This invention relates to the field of CT imaging, and more specifically, to the field of spectral CT imaging.

BACKGROUND OF THE INVENTION

Spectral CT imaging involves the acquisition of CT images using a spectrum of different x-ray energies to measure how the attenuation characteristics of materials may vary depending on the energy of the incident radiation. This technique may be particularly useful for material decomposition of CT images. The X-ray attenuation measured by CT imaging systems will be dependent on both the energy of the incident radiation and the material the radiation is passing through. By obtaining measurements across a spectrum of energies, the dependence of the attenuation value on the incident energy can be decoupled and therefore information can be gathered about the composition of the materials the x-rays pass through. There are various ways in which spectral CT imaging systems may be implemented including photon counting CT systems, dual source CT, dual-layer CT, and fast kVp-switching.
Spectral CT imaging systems often generate more scan data than conventional energy integrated CT imaging systems (which are insensitive to the energy of the incident radiation) due to the higher number of energy channels and a smaller pixel size. Therefore, typically spectral CT imaging data is down-sampled or obtained at lower resolutions to reduce processing times and storage space. Therefore, it is typical that data is lost in the storage and processing of spectral CT images, placing a practical limit on their resolution.

SUMMARY OF THE INVENTION

The invention is defined by the claims.
According to examples in accordance with an aspect of the invention, there is provided a method for recovering resolution of spectral base images acquired using spectral CT imaging techniques.
The method comprising: obtaining at least one low-resolution spectral base image of a field of view of a first resolution value, the at least one low-resolution spectral base image having been acquired using a spectral CT imaging technique and comprising information about the material composition of substances in the field of view; obtaining a high-resolution CT image of the field of view of a second resolution value greater than the first resolution value; and generating, based on the at least one low-resolution spectral base image and the high-resolution CT image, at least one resolution recovered spectral base image of the field of view of a third resolution value greater than the first resolution value.
Proposed concepts thus aim to provide schemes, solutions, concepts, designs, methods, and systems pertaining to a method for recovering resolution of spectral base images acquired using spectral CT imaging techniques. In particular, embodiments aim to provide a method for generating a resolution recovered spectral base image of a field of view of a third resolution based on a low-resolution spectral base image of the field of view of a first resolution and a CT image of the field of view of a second resolution, where the first resolution is lower than the second and third resolutions.
Thus, the proposed invention provides a method for improving the resolution of a spectral base CT image using a higher resolution CT image (e.g., a conventional CT image generated by largely neglecting the spectral information obtained and comprising information similar to that contained in a CT image generated with an energy-integrating detector). This may be advantageous as a CT image will require less processing time than a spectral base image of the same resolution and are typically acquired and stored alongside spectral base images. Therefore, the proposed invention allows for memory space and bandwidth to be saved by storing spectral base image data with a lower resolution and then up-sampling this data on demand using the high-resolution CT image data.
In recent years, spectral CT imaging systems have been gaining traction. The amount of data that is required to be stored for these systems is increased significantly compared to energy integrated imaging data. This is particularly true for photon counting CT imaging systems. The cause of this is two-fold: there are a higher number of energy channels in spectral CT imaging as data is obtained over a spectrum of different energy values; and the pixel size is reduced. For example, a typical CT imaging system with a photon counting detector may have a 0.5 mm by 0.5 mm pixel size and 5 energy channels. This system will generate 30 times more data per scan than a conventional CT system which has pixel size 1.5 mm by 1 mm.
Once spectral CT imaging data has been obtained, various process such as preprocessing, material decomposition and spectral base image reconstruction are carried out on the spectral imaging data. The result of these processes is a set of spectral base images that comprise information about the material composition of substances in the field of view of the CT scanner. Due to the larger amount of data involved, the processing time required for these processes may be long. Additionally, the demand for storage space for the reconstructed spectral base images resulting from these processes may be large. The increased processing time and increased demand for storage space can be mitigated by using down-sampled data in the spectral processing. Down-sampling will result in low-resolution of the reconstructed spectral base images which although saving on storage space, may result in less useful images for diagnosis and assessment of a patient.

It has been realized that conventional CT images that do not contain spectral information may be used to recover the resolution of the low-resolution spectral base images whilst still ensuring quick processing times and reduced storage requirements. Since conventional CT images have low processing requirements, the high-resolution of these images can be maintained whilst avoiding the disadvantages that arise from storing and generating high-resolution spectral base images. The proposed invention, in some embodiments, therefore leverages a high-resolution conventional CT image to recover the resolution of a high-resolution spectral base image based on a low-resolution spectral base image.

Although the proposed invention is discussed below mainly in the context of high-resolution conventional CT images, other forms of high-resolution CT images can be used for the resolution recovery process in other embodiments. For example, mono-energetic CT images can be obtained from spectral CT imaging data. The process of constructing a mono-energetic CT image may be expensive for high resolutions and so this may not provide the advantage of reduced processing times. However, they may still be used for the process of resolution recovery of spectral base images when reducing the storage spaces of the final images is of importance.

Ultimately, an improved method for recovering the resolution of material images acquired using spectral CT imaging techniques may be provided by the proposed concept(s).

In some embodiments, the third resolution value may be substantially equal to the second resolution value. Some implementations of the proposed method may thus allow for the resolution recovered spectral base image to have the same resolution as the high-resolution CT image. Thus, the high-resolution CT image may be selected to have the target resolution of the at least one resolution recovered spectral base image.

In some embodiments, the method may further comprise obtaining a low-resolution CT image of the field of view of a fourth resolution value, the fourth resolution value being less than the second resolution value and generating the high-resolution material image may be further based on the low-resolution CT image. Using a pair of low- and high-resolution CT images may prove an accurate way of obtaining the resolution recovered spectral base image since information can be garnered about how data is lost and/or altered between the low- and high-resolution CT image.

In some embodiments, generating the at least one resolution recovered spectral base images may comprise: determining a mapping between the at least one low-resolution spectral base image and the low-resolution CT image; and generating the at least one resolution recovered spectral base image based on the high-resolution CT image and the determined mapping. It is expected that the correspondence or mapping between a CT image and a material reconstructed image may be unchanged by the resolution of the images. Therefore, determining a mapping between the at least one low-resolution spectral base image and the low-resolution CT image allows for the accurate determination of at least one resolution recovered spectral base image from the high-resolution CT image.

In some embodiments, the determined mapping comprises a linear mapping. Using a linear mapping may provide a simple yet effective and accurate method for generating the at least one resolution recovered spectral base image.

In some embodiments, obtaining the low-resolution CT image of the field of view may comprise down sampling the high-resolution CT image of the field of view. This reduces the requirement for the low-resolution CT image to be stored and allows for greater control over the resolution of the low-resolution CT image.

In some embodiments, generating at least one resolution recovered spectral base image may comprise: resampling the at least one low-resolution spectral base image to generate at least one candidate resolution recovered spectral base image; and generating the at least one resolution recovered spectral base image based on the at least one candidate resolution recovered spectral base image and the high-resolution CT image. Simple resampling methods such as linear or spline interpolation may be used to estimate a resolution recovered spectral base image which may then be refined based on the high-resolution CT image. Generating at least one candidate resolution recovered spectral base image in this way may improve the efficiency of generating the at least one resolution recovered spectral base image.

In some embodiments, the at least one low-resolution spectral base image may comprise at least two low-resolution spectral base images, and generating the at least one resolution recovered spectral base image may comprise: generating at least two candidate resolution recovered spectral base images of the field of view based on the at least two low-resolution spectral base images; calculating, for each voxel of the high-resolution CT image, a difference between the value of a voxel of the high-resolution CT image and the sum of the values of corresponding voxels of the at least two candidate resolution recovered spectral base images; and generating at least two resolution recovered spectral base images based on the calculated difference. Spectral base images describe the material composition of substances in the field of view with respect to a certain basis which may be a basis material or a basis form of radiation absorption process. It can be approximated that the majority of the field of view may consist of only two or more basis materials. Therefore, as an approximation, a voxel of the CT image should be equal to the sum of at least two spectral base images. This fact may be used as a metric for refining the at least two candidate resolution recovered spectral base images to generate the at least two resolution recovered spectral base images in an accurate way.

In some embodiments, generating the at least one resolution recovered spectral base image may further comprise: calculating, for each voxel of the at least two low-resolution spectral base images, a first gradient value describing the local gradient in voxel values; and calculating, for each voxel of the at least two candidate resolution recovered spectral base images, a second gradient value describing the local gradient in the voxel values. Generating the at least two resolution recovered spectral base images may then be further based on the first and second gradient values. Comparing the gradients in the candidate resolution recovered spectral base images to those in the low-resolution spectral base images may permit the candidate resolution recovered spectral base images to be refined such that they more accurately reflect a higher resolution spectral base image of the field of view.

In some embodiments, each voxel of the at least two low-resolution spectral base images may correspond to a plurality of voxels in the at least two candidate resolution recovered spectral base images, and generating the at least one resolution recovered spectral base image may further comprise calculating, for each voxel of the at least two low-resolution spectral base images, a difference between the value of the voxel and an average value of the corresponding plurality of voxel values of the corresponding resolution recovered spectral base image, and generating the at least two resolution recovered spectral base images may be further based on the calculated differences. Including these steps ensures that the resolution recovered spectral base images accurately reflect the spectral CT data acquired to form the low-resolution spectral base images.

In some embodiments, generating the at least two resolution recovered spectral base images may further comprise calculating for each voxel of each of the at least two candidate resolution recovered spectral base images a difference between the value of the voxel and a value of a neighboring voxel, and generating the at least two resolution recovered spectral base images may be further based on this calculation. This proposed embodiment aims to regularize noise in the resolution recovered spectral base images. This may result in more realistic and accurate resolution recovered spectral base images and leads to, optimally edge preserving, noise reduction. This may be particularly advantageous when there are a large number of spectral base images or the difference in the size of the voxels of the high resolution CT image and the low resolution spectral base images is large.

In some embodiments, the high-resolution CT image may comprise one of: a high-resolution conventional CT image; or a high-resolution mono-energetic CT image. The use of either of these images may provide processing and/or storage requirement reduction.

According to another aspect of the proposed invention, there is provided a computer program comprising computer program code means adapted, when said computer program is run on a computer, to implement any of the above methods.

According to a third aspect of the proposed invention, there is provided a processing arrangement configured to: obtain at least one low-resolution spectral base image of a field of view of a first resolution value, the at least one low-resolution spectral base image having been acquired using a spectral CT imaging technique and comprising information about the material composition of substances in the field of view; obtain a high-resolution CT image of the field of view of a second resolution value greater than the first resolution value; and generate, based on the at least one low-resolution spectral base image and the high-resolution CT image, at least one resolution recovered spectral base image of the field of view of a third resolution value greater than the first resolution value.

A system for acquiring CT images may also be provided, the system comprising: at least one CT imaging device; and the processing arrangement described above.

Thus, there may be proposed methods and systems for recovering resolution of spectral base images acquired using spectral CT imaging techniques, based on a low-resolution spectral base image and a high-resolution CT image. The proposed methods and system may be employed in combination with conventional/existing CT imaging methods and systems. In this way, embodiments may integrate into legacy systems to improve and/or extend their functionality and capabilities. An improved CT imaging system that permits resolution recovery of spectral base CT images may therefore be provided by the proposed embodiments.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Fig. 1 is a simplified flow diagram of a method for recovering resolution of spectral base images acquired using spectral CT imaging techniques according to a proposed embodiment;
Fig. 2 is a simplified flow diagram of a method for recovering resolution of spectral base images acquired using spectral CT imaging techniques according to another proposed embodiment;
Fig. 3 is a simplified flow diagram of a method for recovering resolution of spectral base images acquired using spectral CT imaging techniques according to a third proposed embodiment;

Fig. 4 is a simplified block diagram of a system for acquiring CT images according to another aspect of the present invention; and

Fig. 5 illustrates an example of a computer within which one or more parts of an embodiment may be employed.

## DETAILED DESCRIPTION OF THE EMBODIMENTS

The invention will be described with reference to the Figures.

Embodiments of the invention aim to provide a method for recovering resolution of material images obtained from spectral CT imaging. This is achieved by generating at least one resolution recovered spectral base image of the field of view based on a low-resolution spectral base image of the field of view and a high-resolution CT image of the field of view. The proposed invention is therefore advantageous in that it allows on-demand generation of resolution recovered spectral base CT images with higher resolution for diagnosis and assessment of patients, whilst requiring only a low-resolution spectral base image and a high-resolution CT image to be stored and processed.

Spectral CT imaging involves the acquisition of CT images for a spectrum of x-ray energies. The acquired data may be processed to produce spectral base images (which may also be known as material images) of the field of view which describe the material composition of substances in the field of view. For example, typically a dual-energy CT imaging system may be used. This results in the acquisition of two CT images of the field of view each corresponding to a different energy spectrum of x-ray radiation. These may be processed using material decomposition and material reconstruction techniques to generate a photoelectric effect and a Compton effect image of the field of view. Each of these images describes for each voxel of the obtained spectral base images what proportion of the measured x-ray attenuation is due to the photoelectric effect and Compton scattering respectively. Different materials will result in different proportions of radiation attenuation from these two effects being measured and therefore the generated spectral base images allow for the identification of different materials in the field of view. This is just one example of a spectral imaging technique for the generation of spectral base images, and many other spectral imaging techniques may be used to obtain the at least one low-resolution spectral base image of the proposed invention. Various different basis materials and basis effects may form the basis in material space for the spectral base images formed from spectral CT imaging. These may include, for example, water and iodine (which is often used as a contras agent in CT imaging), or bone tissue and soft tissue.

A large amount of spectral imaging data may be acquired via these techniques and therefore the processing requirements for performing material decomposition and reconstruction of spectral base images may be high. To circumvent this fact, spectral imaging data is often down-sampled to lower resolutions before it is stored and processed. This results in a loss of data and resolution in the generated spectral base images which may be disadvantageous for the use of the spectral base images in clinical settings. The proposed invention provides a solution to this problem by allowing for the generation of resolution recovered spectral base images from the low-resolution spectral base images that result from the down-sampling and processing of spectral imaging data.

Conventional CT images are often obtained alongside spectral CT images. These images do not contain spectral information. They may be obtained from the sum of data from different energy channels of a photon counting CT detector for example. The use of conventional CT images may be advantageous as they are typically associated with low levels of noise. Conventional CT images may therefore be provided that have higher resolution than the spectral base images stored alongside them. Embodiments of the proposed invention leverage this fact and utilize a high-resolution conventional CT image to improve the resolution of low-resolution spectral base images.

Some embodiments may utilize a high-resolution mono-energetic CT image for the resolution recovery of the low-resolution spectral base images. Mono-energetic images of high resolution can be obtained from spectral imaging data and using these images for resolution recovery may be advantageous in reducing storage requirements of the final images.

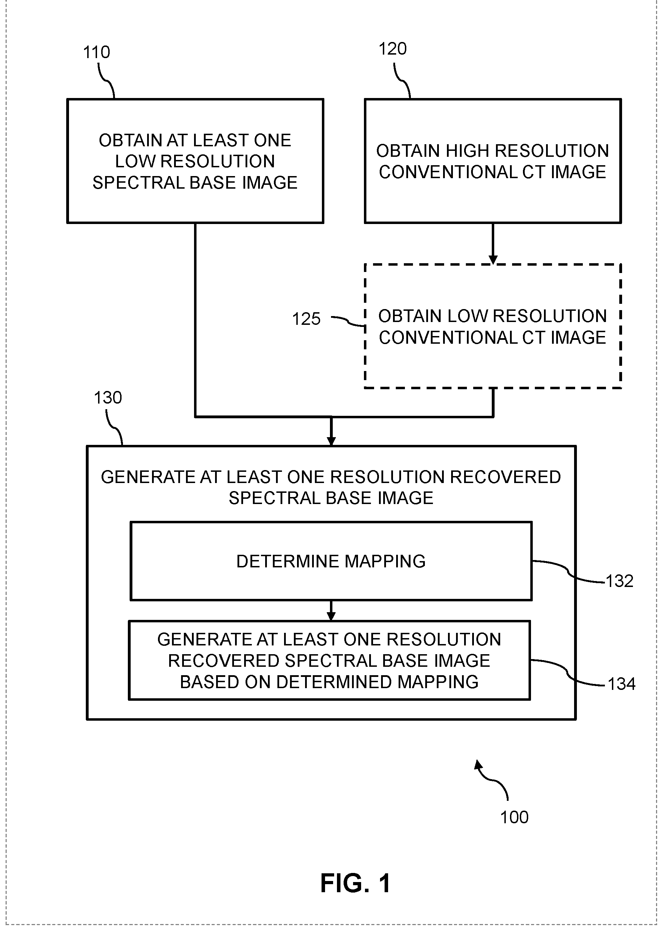

Referring now to Fig. 1 there is depicted a simplified flow diagram of a method 100 for recovering resolution of spectral base images acquired using spectral CT imaging techniques according to a proposed embodiment.

The method commences with a step 110 comprising obtaining at least one low-resolution spectral base image of the field of view of a first resolution value, the at least one low-resolution spectral base image having been acquired using a spectral CT imaging technique and comprising information about the material composition of substances in the field of view.

The method 100 further comprises a step 120 of obtaining a high-resolution conventional CT image of the field of view of a second resolution greater than the first resolution value.

In this exemplary embodiment, an optional step 125 proceeds from step 120 and comprises obtaining a low-resolution conventional CT image of the field of view of a fourth resolution value, the fourth resolution value being less than the second resolution value. In this exemplary method, step 125 comprises down sampling and/or filtering the high-resolution conventional CT image to generate a corresponding low-resolution conventional CT image such that a low and high-resolution pair of conventional CT images is obtained.

The method 100 then proceeds to step 130 comprising generating, based on the at least one low-resolution spectral base image, the high-resolution conventional CT image, and the low-resolution conventional CT image, at least one resolution recovered spectral base image of the field of view of a third resolution value greater than the first resolution value.

In this exemplary embodiment, step 130 comprises sub-steps 132 and 134. Step 132 comprises determining a mapping between the at least one low-resolution spectral base image and the low-resolution conventional CT image. The mapping in this example is a linear mapping between voxel values of the at least one low-resolution spectral base image and corresponding voxel values associated with the same region of the field of view of the low-resolution conventional CT image. Step 134 comprises generating the at least one resolution recovered spectral base image based on the high-resolution conventional CT image and the determined mapping.

Thus, in this proposed example method, the high-resolution conventional CT image is used to generate a low-resolution conventional CT image. This is configured to be associated with a voxel grid of the same dimensions as the voxel grid of the low-resolution spectral base image and with an image resolution resembling the resolution of the low-resolution spectral base images. A linear mapping is then determined that describes a linear transformation between each voxel value of the low-resolution conventional CT image to a corresponding voxel value of the at least one low-resolution spectral base image. This linear mapping is then used to transform the voxel values of the high-resolution conventional CT image to material space and generate at least one resolution recovered spectral base image.

The resolution of the generated at least one resolution recovered CT image may be equal to the resolution of the high-resolution conventional CT image, but this is not necessarily the case in all embodiments. The resolution of an image is defined by the point spread function (PSF) of the imaging process used to acquire the image and is a measure of the smallest size of a detail in the field of view than can still be seen in the image. The voxel grid of an image defines the voxel size, i.e., the distance between voxel centers in the image. For an image to have a certain resolution, the voxel size may not exceed a certain limit value, but sizes smaller than the limit value are possible. Simply decreasing the size of voxels of an image will not necessarily improve the resolution of the image if the voxel grid is not the limiting factor for image resolution. Thus, a low-resolution image can exist on the same voxel grid as a high-resolution image but still have a lower resolution.

If the voxel grid of the high-resolution conventional CT image does not have the same dimensions as the target voxel grid of the at least one resolution recovered spectral base image, the high-resolution conventional CT image may be resampled to ensure it can be mapped to a suitable resolution recovered spectral base image. Thus, the method 100 may further comprise sampling the high-resolution conventional CT image to generate a resampled conventional CT image, wherein generating the at least one resolution recovered spectral base image is based on the resampled conventional CT image and the low-resolution spectral base image.

In the proposed method 100, the resolution recovered spectral base image is mapped onto a voxel grid that has the same dimensions as the voxel grid of the high-resolution conventional CT image. The resolution of the image is, due to the mapping, improved from the resolution of the low-resolution spectral image.

We now describe a specific implementation of the method 100 in more detail. We consider the case of a single low-resolution spectral base image with voxel values $p_i^L$ and a low-resolution conventional CT image with voxel values $c_i^L$. For the purposes of resolution recovery it is assumed that voxel values in a local neighborhood of the spectral base image represent either a homogeneous region (i.e., the attention properties associated with them can be described by a single material - note that this need not be one of the spectral base materials but may be a combination of the spectral base materials) or maximally a combination of two materials (for example the voxel is associated with an edge between two materials). In the two-material case, the voxel values in both the conventional and the low-resolution spectral image will depend on the attenuation properties of the two materials associated with the voxel. As such their values can be described by

$$c_i^L = f_i^L \cdot \mu_{1i}^C + (1 - f_i^L) \cdot \mu_{2i}^C \text{; and} \tag{1}$$

$$p_i^L = f_i^L \cdot \mu_{1i}^P + (1 - f_i^L) \cdot \mu_{2i}^P, \tag{2}$$

where $\mu_{1i}^C$ and $\mu_{2i}^C$ are the attenuation coefficients of the two materials corresponding to the local effective energy in low-resolution conventional CT image, $\mu_{1i}^P$ and $\mu_{2i}^P$ are the photo effect attenuation coefficients of these two materials, and $f_i^L$ is the volume fraction of the first material associated with the voxel $i$.

Eliminating $f_i^L$ from these equations gives

$$p_i^L = \mu_{2i}^P + \left(c_i^L - \mu_{2i}^C\right) \cdot \frac{\mu_{1i}^P - \mu_{2i}^P}{\mu_{1i}^C - \mu_{2i}^C}, \tag{3}$$

showing that the voxel values of the photoelectric effect low-resolution spectral base image can be described as a linear function of the voxel values of the low-resolution conventional CT image. The coefficients for this linear function can be determined for each voxel $i$ of the low-resolution spectral base image by locally fitting a linear relationship between the voxel values of the low-resolution conventional CT image and the low-resolution spectral base image within a small neighborhood of the voxel $i$ using linear regression methods. Thus, the linear mapping of the method 100 may be a local linear mapping describing a linear mapping for a small neighborhood of voxel values. Alternatively or additionally a weighted linear mapping may be used. The weighted linear mapping may include weighting factors that weight the influence of different voxel values on the linear fit, where values of voxels closer to the voxel under consideration get a higher weight.

The same linear relationship derived in Equation 3 will hold for higher resolutions. As such once the linear mapping for each voxel $i$ in the low-resolution spectral base image has been determined, voxel values $p_j^H$ of the resolution recovered spectral base image may be calculated from the voxel values $c_j^H$ of the high-resolution conventional CT image as

$$p_j^H = \mu_{2i}^P + \left(c_j^H - \mu_{2i}^C\right) \cdot \frac{\mu_{1i}^P - \mu_{2i}^P}{\mu_{1i}^C - \mu_{2i}^C},$$

where it is important that the location of the voxel $j$ in the high-resolution volume (4) close to the location of the voxel $i$ in the low-resolution volume grid to ensure that the calculated coefficients are value in the location of the voxel $j$.

Although the above method is described for a single low-resolution spectral base image, the same method may be applied to any number of low-resolution spectral base images corresponding to different basis materials or absorption effects.

Similarly, other aspects of the method 100 may be implemented differently in alternative embodiments. The low-resolution conventional CT image need not be obtained by down sampling the high-resolution conventional CT image but may instead be obtained directly via conventional CT imaging at a low-resolution. Alternatively, the CT data used to construct the high-resolution conventional CT image data may be down sampled in projection space before image reconstruction takes place and a low-resolution conventional CT image obtained in this way. Smoothing processes may be used alternatively to down sampling to obtain the low-resolution conventional CT image from the high-resolution conventional CT image.

In other embodiments, high-resolution and low-resolution mono-energetic images may be used in place of the high-resolution and low-resolution conventional CT images in steps 120, 125, and 130 of the method 100. In fact, any known CT imaging systems and methods may be used to acquire a high-resolution CT image of the field of view for use in recovering the resolution of the at least one low-resolution spectral base image.

Although the theory above is discussed in terms of a linear mapping, the method 100 does not rely on the mapping being linear. In alternative embodiments, the assumptions discussed above may be relaxed and a more complicated mapping derived. The step 132 may therefore comprise fitting a nonlinear mapping to the voxel values of the low-resolution conventional CT image and the at least one low-resolution spectral base image.

An extension to the method 100 may be employed in some embodiments which may result in improved accuracy of the resolution recovered spectral base image. The method 100 in this case further comprises: resampling the at least one low-resolution spectral base image to generate at least one candidate resolution recovered spectral base image; and generating the at least one resolution recovered spectral base image of the field of view based one candidate resolution recovered spectral base image and the high-resolution conventional CT image.

In detail, in an alternative implementation of the method 100 high-resolution photoelectric effect and Compton scatter effect bases spectral base images with voxel values $p_j^H$ and $s_j^H$ respectively are calculated from a high-resolution conventional CT image and a low-resolution photoelectric effect spectral base image and a low-resolution Compton scatter effect image respectively using equation 4 shown above. The alternative method further involves up-sampling the low-resolution photoelectric effect spectral base image and the low-resolution Compton scatter effect spectral base image on to a high-resolution voxel grid (with the same dimensions as the voxel grid of the high-resolution conventional CT image) to generate up-sampled spectral base images with voxel values $P_j^L$ and $S_j^L$ respectively. (As explained above this process does not increase the resolution of the image but simply maps the image onto more voxels and hence they are still denoted as low-resolution).

The final resolution recovered spectral base images generated by this method can then be derived from the voxel values of the up-sampled low-resolution spectral base images as,

$$p_j^H = P_j^L + \Delta p_j, \text{ and} \tag{5}$$

$$s_j^H = S_j^L + \Delta s_j. \tag{6}$$

A similar component $\Delta c_j$ may be defined for the high and low-resolution conventional CT images

$$\tag{7}$$

$$c_j^H = C_j^L + \Delta c_j,$$

where the low-resolution conventional CT image has been mapped onto a high-resolution voxel grid in a similar manner as the low-resolution spectral base images.

Using the assumption that the sum of the voxel values of the two spectral base images should be equal to the corresponding voxel value of the conventional CT image the following relationships can be derived

$$\Delta p_j = \frac{\frac{p_j^H}{s_j^H}\left(s_j^L + \Delta c_j\right) - p_j^L}{\frac{p_j^H}{s_j^H} + 1}, \text{ and} \tag{8}$$

$$\Delta s_j = \Delta c_j - \Delta p_j. \tag{9}$$

This assumption may require that scaling has been performed on the images such that the conventional CT image is approximately the scaled sum of the spectral base images.

Calculation of the components $\Delta p_j$ and $\Delta s_j$ may therefore rely only on the voxel values of the up-sampled low-resolution spectral base images, the difference between the voxel values of the low and high-resolution conventional CT images and the ratio $p_j^H / s_j^H$. This ratio can be calculated from the voxel values $p_j^H$ and $s_j^H$ calculated using Equation 4. Voxel values $p_j^{H2}$ and $s_j^{H2}$ of the resolution recovered spectral base images can then be calculated as

$$p_j^{H2} = p_j^L + \Delta p_j,$$

and

$$s_j^{H2} = s_j^L + \Delta s_j.$$

This extension of the proposed method 100 for recovering resolution of spectral base images may in some instances show improved accuracy in the resolution recovered images, as it introduces the assumption that the high-resolution conventional CT image corresponds to the sum of the resolution recovered spectral base images which may not necessarily hold for the resolution recovered spectral base images generated by the method 100.

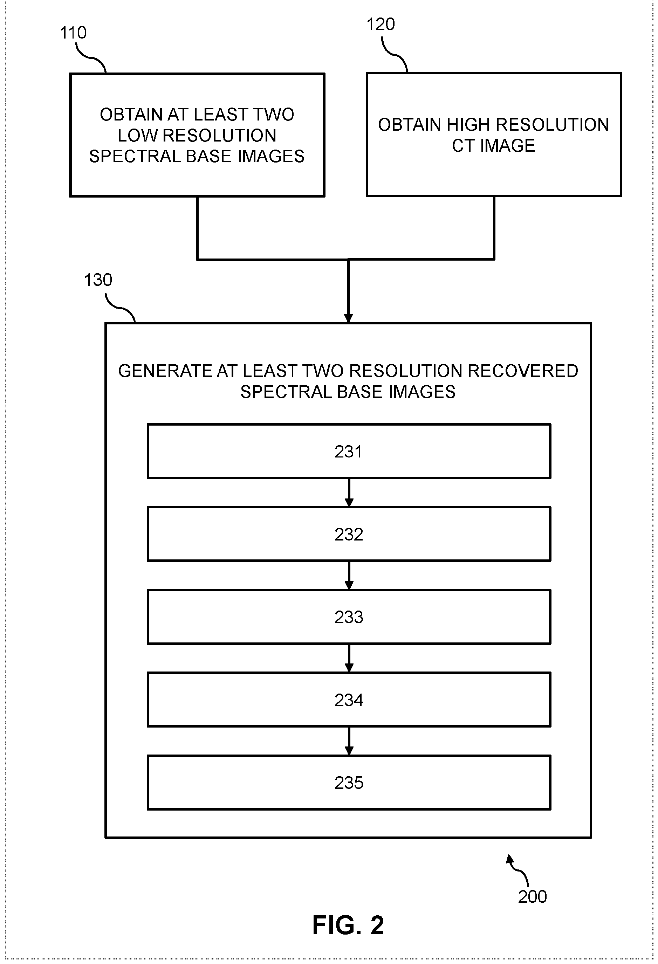

Referring now to Fig. 2, there is depicted a simplified flow diagram of a method 200 for recovering resolution of spectral base images obtained via a spectral CT imaging technique according to an alternative embodiment.

The method 200 commences with a step 110 comprising obtaining at least two low-resolution spectral base images of the field of view of a first resolution value. Step 120 of the method 200 comprises obtaining a high-resolution CT image of the field of view of a second resolution value greater than the first resolution value.

Once the at least two low-resolution spectral base images and the high-resolution CT image have been obtained, the method proceeds to a step 130 comprising generating, based on the at least one low-resolution spectral base images and the high-resolution CT image, at least one resolution recovered spectral base image of the field of view of a third resolution greater than the first resolution value.

In the exemplary method 200, step 130 comprises sub-steps 231, 232, 233, 234, and 235. Step 231 comprises generating at least two candidate resolution recovered spectral base images of the field of view based on the at least two low-resolution spectral base images.

Step 232 comprises calculating, for each voxel of the high-resolution CT image, a difference between the value of a voxel of the high-resolution CT image and the sum of the values or corresponding voxels of the at least two candidate resolution recovered spectral base images.

Step 233 comprises calculating, for each voxel of the at least two low-resolution spectral base images, a first gradient value describing the local gradient in voxel values, calculating, for each voxel of the at least two candidate resolution recovered spectral base images, a second gradient value describing the local gradient in the voxel values.

Step 234 comprises calculating, for each voxel of the at least two low-resolution spectral base images, a difference between the value of the voxel and an average value of the corresponding plurality of voxel values of the at least two candidate resolution recovered spectral base images.

Step 235 comprises generating at least two resolution recovered spectral base images based on the calculations of steps 231 to 234.

In alternative embodiments, some of the steps 232, 233 or 234 may be omitted depending on processing requirements and availability.

In detail, step 235 of the method 200 may comprise minimizing the figure-of-merit function

$$FOM = FOM_1 + \lambda_2 FOM_2 + \lambda_3 FOM_3, \tag{12}$$

where $\lambda_2$ and $\lambda_3$ are weighting factors that may be adjusted to tune the optimization result, and $FOM_1$ is a function of the difference calculated in step 232, $FOM_2$ is a function of the first and second gradient values calculated in step 233, and $FOM_3$ is a function of the difference calculated in step 234.

For example, in some embodiments, $FOM_1$, $FOM_2$, and $FOM_3$ are given by:

$$FOM_1(q^H) = \sum_j \left[ c_j^H - \sum_m q_{j,m}^H \right]^2; \tag{13}$$

$$FOM_2(q^H) = \sum_i \sum_m \sum_{dim=x,y,z} \left[ [grad_{dim}^L(p_m^L)]_i - [grad_{dim}^H(q_m^H)]_i \right]^2; \text{ and} \tag{14}$$

$$FOM_3(q^H) = \sum_m \sum_j \left[ p_{j,m}^L - \frac{1}{N\_ds} \sum_{i=0}^{N_{ds}-1} q_{j_0(i)+j,m}^H \right]^2. \tag{15}$$

where again $c_j^H$ are the voxel values of the high-resolution CT image, $p_{i,m}^L$ are the voxel values of the at least two low-resolution spectral base images (the index $m$ is used to denote the different images within the at least two low-resolution spectral base images) and $q_{j,m}^H$ are the voxel values of the at least two candidate resolution recovered spectral base images. In this formulation we assume that each voxel $i$ of the low-resolution images covers the same image volume as a set of $N_{ds}$ voxels with indices $j = j_0(i), \ldots, j_0(i) + N_{ds} - 1$ in the high-resolution CT image and the at least two resolution recovered spectral base images.

In Equation 14, $grad_{x/y/z}^L$ are the gradients in the low-resolution spectral base images, calculated in x, y, and z-direction respectively, this may be achieved for example by convolving the image with kernels like

$$\begin{pmatrix} -1 & 0 & 1 \\ -2 & 0 & 2 \\ -1 & 0 & 1 \end{pmatrix},$$

and $grad_{x/y/z}^H$ are gradients measured within the plurality of voxels of the candidate resolution recovered spectral base images that correspond to the voxel $i$ of the low-resolution spectral base images.

The exemplary method 200 for recovering resolution of spectral base images may be advantageous since the determination of the resolution recovered spectral base images is executed separately for each voxel of the low-resolution spectral base image. This separation allows a fast converging and highly parallelizable solution of the optimization problem, enabling an on-demand computation of the resolution recovered spectral base images.

Further factors may be introduced into Equation 12 to further improve the generated resolution recovered spectral basis images. For example, the method may further comprise calculating for each voxel of each of the at least two candidate resolution recovered spectral base images a difference between the value of the voxel and a value of a neighboring voxel and introducing this difference into the figure-of-merit function described above. Additional terms such as this may be required when the difference between the voxel grids of the low-resolution and resolution recovered images is great or when the number of basis images is great such that the number of degrees of freedom is larger than the number of conditions in the above FOM function.

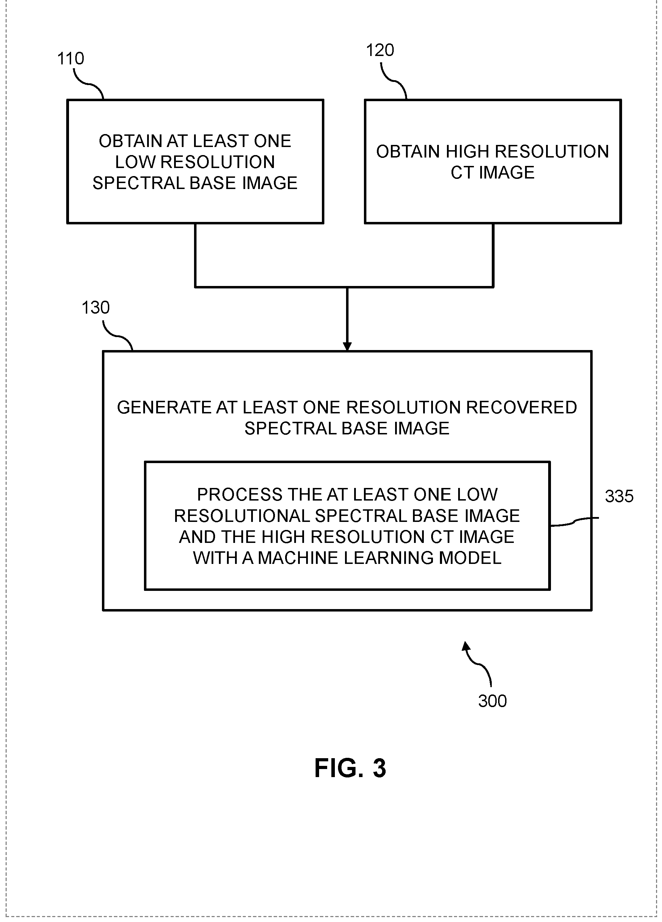

Referring now to Fig. 3 there is depicted a simplified flow diagram of a method 300 for recovering resolution of spectral basis images acquired using spectral CT imaging techniques according to a third proposed embodiment.

The method 300 commences with step 110 comprising obtaining at least one low-resolution spectral basis image of a field of view of a first resolution, and step 120 comprising obtaining a high-resolution CT image of the field of view of a second resolution greater than the first resolution.

Step 130 of the method 300 comprises generating at least one resolution recovered spectral base image of a third resolution, based on the at least one low-resolution spectral base image and the high-resolution CT image, wherein the third resolution is higher than the first resolution. In this exemplary embodiment, step 130 comprises the sub-step 335 which comprises processing the at least one low-resolution spectral base image and the high-resolution CT image with a machine learning model to generate at least one resolution recovered spectral base image.

Suitable machine-learning algorithms for being employed in the present invention will be apparent to the skilled person. Examples of suitable machine-learning algorithms include decision tree algorithms and artificial neural networks. Other machine-learning algorithms such as logistic regression, support vector machines, or Naive Bayesian models are suitable alternatives.

The structure of an artificial neural network (or, simply, neural network) is inspired by the human brain. Neural networks are comprised of layers, each layer comprising a plurality of neurons. Each neuron comprises a mathematical operation. In particular, each neuron may comprise a different weighted combination of a single type of transformation (e.g., the same type of transformation, sigmoid etc. but with different weightings). In the process of processing input data, the mathematical operation of each neuron is performed on the input data to produce a numerical output, and the outputs of each layer in the neural network are fed into the next layer sequentially. The final layer provides the output.

Methods of training a machine-learning algorithm are well known. Typically, such methods comprise obtaining a training dataset, comprising training input data entries and corresponding training output data entries. An initialized machine-learning algorithm is applied to each input data entry to generate predicted output data entries. An error between the predicted output data entries and corresponding training output data entries is used to modify the machine-learning algorithm. This process can be repeated until the error converges, and the predicted output data entries are sufficiently similar (e.g. $\pm 1\%$) to the training output data entries. This is commonly known as a supervised learning technique.

For example, weightings of the mathematical operation of each neuron may be modified until the error converges. Known methods of modifying a neural network include gradient descent, backpropagation algorithms and so on.

The training input data entries for the machine learning model used in the method 300 described above correspond to example sets of low-resolution spectral basis images with the first resolution and corresponding high-resolution CT images of the same field of view that have a second resolution greater than the first resolution. The training output data entries correspond to a set of high-resolution spectral basis images with a third resolution greater than the first resolution of the field of view. For example, high-resolution spectral basis images may be obtained directly from spectral imaging data acquired during spectral CT imaging procedures and a corresponding set of low-resolution spectral basis images formed by down sampling the spectral imaging data. In other words, the machine learning model of the method 300 may be trained using a deep learning algorithm configured to receive an array of training inputs and respective known outputs, wherein a training input comprises a set of low-resolution spectral base images of a field of view with a first resolution and a corresponding high-resolution CT image of the field of view, and a respective known output comprises a set of real spectral basis images of the field of view of a third resolution greater than the first resolution. In this way, the machine learning model of the present invention may be trained to output at least one resolution recovered spectral basis image of a third resolution higher than a first resolution when provided with at least one spectral basis image of the first resolution and a high-resolution CT image of the field of view with a second resolution higher than the first resolution.

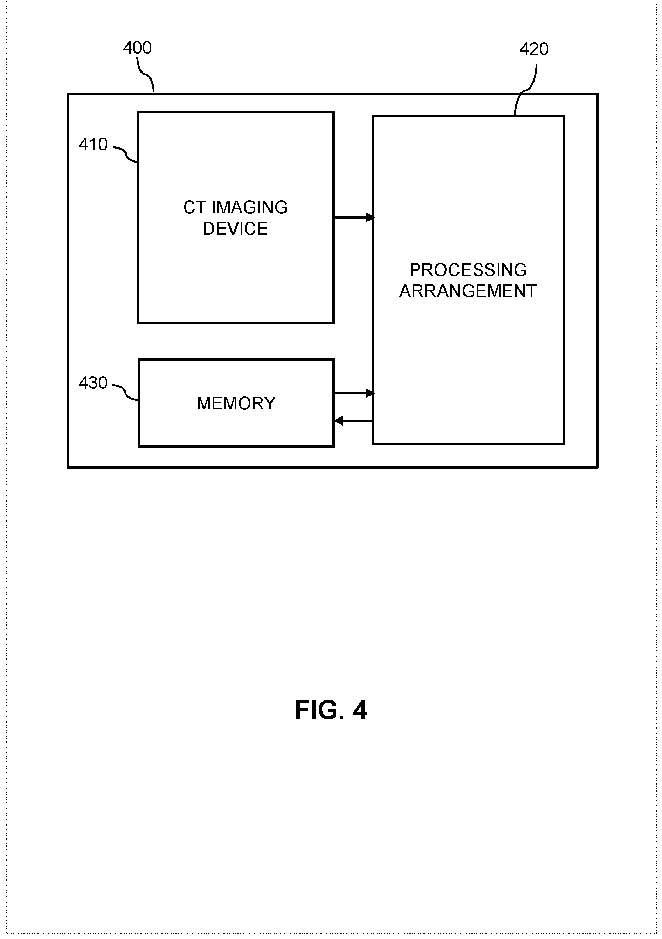

Referring now to Fig. 4, there is depicted a simplified block diagram of a system 400 for acquiring CT images according to an aspect of the proposed invention. The system 400 comprises at least one CT imaging device 410, a processing arrangement 420, and a memory 430.

The at least one CT imaging device 410 is configured to acquire CT imaging data including at least a portion of spectral imaging data. The at least one CT imaging device 410 may therefore comprise one or more CT imaging devices capable of performing conventional and spectral CT imaging.

The CT imaging data acquired by the at least one CT imaging device 410 is passed to the processing arrangement 420 and used to obtain at least one low-resolution spectral base image of a field of view of a first resolution value and a high-resolution CT image of the field of view of a second resolution value greater than the first resolution value. The at least one low-resolution spectral base image and the high-resolution CT image may then be stored in the memory 430.

At some point in time, for example when diagnosis and assessment of a patient is to be carried out, the processing arrangement 420 is configured to recover the at least one low-resolution spectral base image and the high-resolution CT image from the memory 430. The processing arrangement 420 processes the least one low-resolution spectral base image and the high-resolution CT image to generate at least one resolution recovered spectral base image of a third resolution greater than the first resolution.

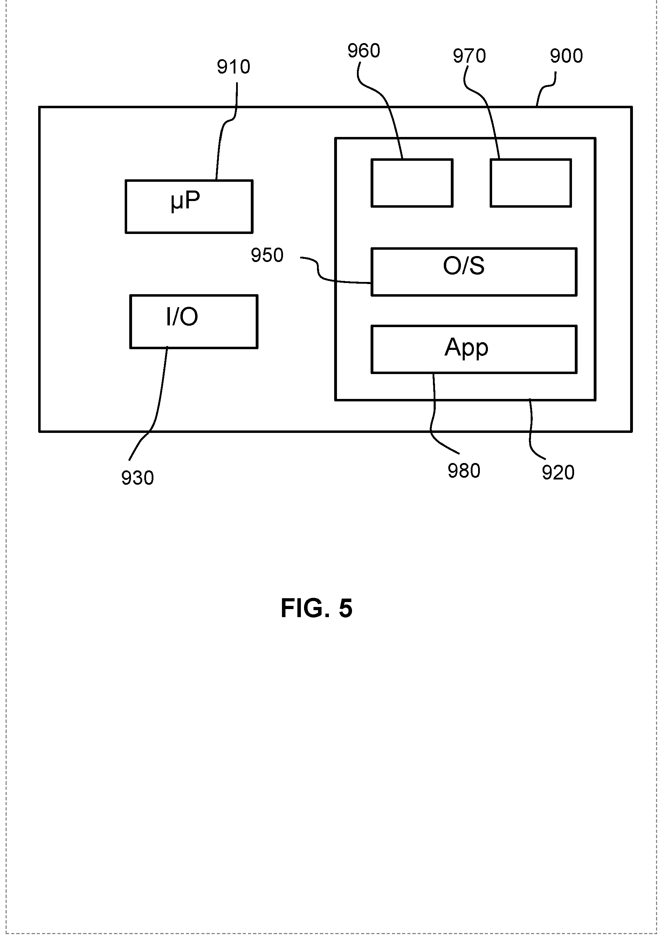

Fig. 5 illustrates an example of a computer 900 within which one or more parts of an embodiment may be employed. Various operations discussed above may utilize the capabilities of the computer. For example, one or more parts of a proposed embodiment may be incorporated in any element, module, application, and/or component discussed herein. In this regard, it is to be understood that system functional blocks can run on a single computer or may be distributed over several computers and locations (e.g. connected via internet), such as a cloud-based computing infrastructure.

The computer 900 includes, but is not limited to, PCs, workstations, laptops, PDAs, palm devices, servers, storages, and the like. Generally, in terms of hardware architecture, the computer 900 may include one or more processors 910, memory 920 and one or more I/O devices 930 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 910 is a hardware device for executing software that can be stored in the memory 920. The processor 910 can be virtually any custom made or commercially available processor, a central processing unit (CPU), a digital signal processor (DSP), or an auxiliary processor among several processors associated with the computer 900, and the processor 910 may be a semiconductor-based microprocessor (in the form of a microchip) or a microprocessor.

The memory 920 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 920 may incorporate electronic, magnetic, optical, and/or other types of storage media. Note that the memory 920 can have a distributed architecture, where various components are situated remote from one another, but can be accessed by the processor 910.

The software in the memory 920 may include one or more separate programs, each of which comprises an ordered listing of executable instructions for implementing logical functions. The software in the memory 920 includes a suitable operating system (O/S) 950, compiler 960, source code 970, and one or more applications 908 in accordance with exemplary embodiments. As illustrated, the application 980 comprises numerous functional components for implementing the features and operations of the exemplary embodiments. The application 980 of the computer 900 may represent various applications, computational units. Logic, functional units, processes, operations, virtual entities, and/or modules in accordance with exemplary embodiments, but the application 980 is not meant to be a limitation.

The operating system 950 controls the execution of other computer programs and provides scheduling, input-output control, file and data management, memory management, and communication control and related services. It is contemplated by the inventors that the application 980 for implementing exemplary embodiments may be applicable on all commercially available operating systems.

Application 980 may be a source program, executable program (object code), script, or any other entity comprising a set of instructions to be performed. When a source program, then the program is usually translated via a compiler (such as the compiler 960), assembler, interpreter, or the like, which may or may not be included within the memory 920, so as to operate properly in connection with the O/S 950. Furthermore, the application 980 can be written as an object oriented programming language, which has classes of data and methods, or a procedure programming language, which has routines, subroutines, and/or functions, for example but not limited to, C, C++, C#, Pascal, Python, BASIC, API calls, HTML, XHTML, XML, ASP scripts, JavaScript, FORTRAN, COBOL, Perl, Java, ADA, .NET, and the like.

The I/O devices 930 may include input devices such as, for example but not limited to, a mouse, keyboard, scanner, microphone, camera, etc. Furthermore, the I/O devices 930 may also include output devices, for example but not limited to a printer, display, etc. Finally, the I/O devices 930 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 630 also include components for communicating over various networks, such as the Internet or intranet

If the computer 900 is a PC, workstation, intelligent device or the like, the software in the memory 920 may further include a basic input output system (BIOS) (omitted for simplicity). The BIOS is a set of essential software routines that initialize and test hardware at start-up, start the O/S 950, and support the transfer of data among the hardware devices. The BIOS is stored in some type of read-only-memory such as ROM, PROM, EPROM, EEPROM or the like, so that the BIOS can be executed when the computer 900 is activated.

When the computer 900 is in operation, the processor 910 is configured to execute software stored within the memory 920, to communicate data to and from the memory 920, and to generally control operations of the computer 900 pursuant to the software. The application 980 and the O/S 950 are read, in whole or in part, by the processor 910, perhaps buffered within the processor 910 and then executed.

When the application 980 is implemented in software it should be noted that the application 908 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 980 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The proposed methods and/or systems may be implemented in hardware or software, or a mixture of both (for example, as firmware running on a hardware device). To the extent that an embodiment is implemented partly or wholly in software the functional steps illustrate in the process flow diagrams may be performed by suitable programmed physical computing devices, such as one or more central processing units (CPUs) or graphics processing units (GPUs). Each process - and its individual component steps as illustrated in the flow diagrams - may be performed by the same or different computing devices. According to embodiments, a computer-readable storage medium stores a computer program comprising computer program code configured to cause one or more physical computing devices to carry out a method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, some of the blocks shown in the block diagrams may be separate physical components, or logical subdivision of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure, and the appended claims. In the claims the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used int eh claims or the description, it is noted the term "adapted to" is intended to be equivalent to the term "configured to". Any reference signs in the claims should not be construed as limiting the scope.

The flow diagrams and block diagrams in the Figures illustrate the architecture, functionality, and operation of possible implementations of systems, methods, and computer program products according to various embodiments of the present invention. In this regard, each block in the flow diagrams or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact be executed substantially concurrently, or the blocks may sometimes be executed in the reverse order, depending on the functionality involved. It will also be noted that each block of the block diagrams and/or flow diagrams and combinations of blocks in the block diagrams and/or flow diagrams, can be implemented by special purpose hardware-based systems that perform the specified functions or acts or carry out combinations of special purpose hardware and computer instructions.

It should be understood that the detailed description and specific examples, while indicating exemplary embodiments of the apparatus, systems, and methods, are intended for the purpose of illustration only and are not intended to limit the scope of the invention. These and other features, aspects, and advantages of the apparatus, systems, and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Implementations in accordance with the present disclosure relate to various techniques, methods, schemes and/or solutions pertaining to recovering the resolution of spectral base images that have been acquired using spectral CT imaging techniques. According to proposed concepts, a number of possible solutions may be implemented separately or jointly. That is, although these possible solutions may be described below separately, two or more of these possible solutions may be implemented in one combination or another.

**Claims**

1. A method (100) for recovering resolution of spectral base images acquired using spectral CT imaging techniques, the method comprising:

   obtaining (110) at least one low-resolution spectral base image of a field of view of a first resolution value, the at least one low-resolution spectral base image having been acquired using a spectral CT imaging technique and comprising information about the material composition of substances in the field of view;
   obtaining (120) a high-resolution CT image of the field of view of a second resolution value greater than the first resolution value; and
   generating (130), based on the at least one low-resolution spectral base image and the high-resolution CT image, at least one resolution recovered spectral base image of the field of view of a third resolution value greater than the first resolution value.

2. The method of claim 1, wherein the third resolution value is substantially equal to the second resolution value.

3. The method of any preceding claim, wherein the method further comprises obtaining (125) a low-resolution CT image of the field of view of a fourth resolution value, the fourth resolution value being less than the second resolution value, and
   wherein generating the at least one resolution recovered spectral base image is further based on the low-resolution CT image.

4. The method of claim 3, wherein generating the at least one resolution recovered spectral base image comprises:

determining (132) a mapping between the at least one low-resolution spectral base image and the low-resolution CT image; and
generating (134) the at least one resolution recovered spectral base image based on the high-resolution CT image and the determined mapping.

5. The method of claim 4, wherein the determined mapping comprises a linear mapping.

6. The method of any of claims 3-5, wherein obtaining the low-resolution CT image of the field of view comprises down sampling and/or smoothing the high-resolution CT image.

7. The method of any preceding claim, wherein generating at least one resolution recovered spectral base image comprises:

resampling the at least one low-resolution spectral base image to generate at least one candidate resolution recovered spectral base image; and
generating the at least one resolution recovered spectral base image based on the at least one candidate resolution recovered spectral base image and the high-resolution CT image.

8. The method of any preceding claim, wherein the at least one low-resolution spectral base image comprises at least two low-resolution spectral base images, and
wherein generating the at least one resolution recovered spectral base image comprises:

generating (231) at least two candidate resolution recovered spectral base images of the field of view based on the at least two low-resolution spectral base images;
calculating (232) for each voxel of the high-resolution CT image, a difference between the value of a voxel of the high-resolution CT image and the sum of the values of corresponding voxels of the at least two candidate resolution recovered spectral base images; and
generating (235) at least two resolution recovered spectral base images based on the calculated difference.

9. The method of claim 8, wherein generating the at least one resolution recovered spectral base image further comprises:

calculating (233), for each voxel of the at least two low-resolution spectral base images, a first gradient value describing the local gradient in voxel values; and
calculating, for each voxel of the at least two candidate resolution recovered spectral base images, a second gradient value describing the local gradient in the voxel values, and
wherein generating (235) the at least two resolution recovered spectral based images is further based on the first and second gradient values.

10. The method of any of claims 8 and 9, wherein each voxel of the at least two low-resolution spectral base images corresponds to a plurality of voxels of one of the at least two candidate resolution recovered spectral base images, and

wherein generating the at least one resolution recovered spectral base image further comprises calculating (234), for each voxel of the at least two low-resolution spectral base images, a difference between the value of the voxel and an average value of the corresponding plurality of voxel values of the corresponding candidate resolution recovered spectral base image of the at least two candidate resolution recovered spectral base images, and
wherein generating (235) the at least two resolution recovered spectral base images is further based on the calculated differences.

11. The method of any of claims 8-10, wherein generating the at least two resolution recovered spectral base images further comprises calculating for each voxel of each of the at least two candidate resolution recovered spectral base images a difference between the value of the voxel and a value of a neighboring voxel, and
wherein generating the at least two resolution recovered spectral base images is further based on this calculation.

12. The method of any preceding claim, wherein the high-resolution CT image comprises one of:

a high-resolution conventional CT image; or
a high-resolution mono-energetic CT image.

13. A computer program comprising computer program code means adapted, when said computer program is run on a computer, to implement the method of any of claims 1-12.

14. A processing arrangement (420) configured to:

obtain at least one low-resolution spectral base image of a field of view of a first resolution value, the at least one low-resolution spectral base image having been acquired using a spectral CT imaging technique and comprising information about the material composition of substances in the field of view;
obtain a high-resolution CT image of the field of view of a second resolution value greater than the first resolution value; and
generate, based on the at least one low-resolution spectral base image and the high-resolution CT image, at least one resolution recovered spectral base image of the field of view of a third resolution value greater than the first resolution value.

15. A CT imaging system (400) comprising:

at least one CT imaging device (410); and
the processing arrangement (420) of claim 14.

FIG. 1

FIG. 2

110

OBTAIN AT LEAST ONE
LOW RESOLUTION
SPECTRAL BASE IMAGE

120

OBTAIN HIGH RESOLUTION
CT IMAGE

130

GENERATE AT LEAST ONE RESOLUTION RECOVERED
SPECTRAL BASE IMAGE

PROCESS THE AT LEAST ONE LOW
RESOLUTIONAL SPECTRAL BASE IMAGE
AND THE HIGH RESOLUTION CT IMAGE
WITH A MACHINE LEARNING MODEL

335

300

FIG. 3

**FIG. 4**

**FIG. 5**

# EUROPEAN SEARCH REPORT

Europäisches
Patentamt
European
Patent Office
Office européen
des brevets

**Application Number**

EP 24 18 6619

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 218 228 A (UNIV SHANDONG SCIENCE & TECH) 12 December 2023 (2023-12-12) | 1-7, 12-15 | INV. G06T3/4053 |
| A | * paragraph [0001] - paragraph [0017] * <br> * paragraph [0068] * <br> * paragraph [0079] - paragraph [0080] * <br> * paragraph [0109] - paragraph [0135] * <br> * figure 2 * | 8-11 | |
| A | US 2023/007835 A1 (RATCLIFFE ADAM [GB] ET AL) 12 January 2023 (2023-01-12) <br> * paragraph [0003] - paragraph [0011] * | 1-15 | |
| A | QIAN CAO ET AL: "Multiresolution iterative reconstruction in high-resolution extremity cone-beam CT", PHYSICS IN MEDICINE AND BIOLOGY, INSTITUTE OF PHYSICS PUBLISHING, BRISTOL GB, vol. 61, no. 20, 3 October 2016 (2016-10-03), pages 7263-7281, XP020309572, ISSN: 0031-9155, DOI: 10.1088/0031-9155/61/20/7263 [retrieved on 2016-10-03] <br> * page 7263 - page 7265 * | 1-15 | |

**TECHNICAL FIELDS SEARCHED (IPC)**

G06T

The present search report has been drawn up for all claims

| Place of search | Date of completion of the search | Examiner |
|---|---|---|
| Munich | 17 December 2024 | Maier, Werner |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
.................................................................................................
& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 24 18 6619

This annex lists the patent family members relating to the patent documents cited in  the above-mentioned European search report.
The members are as contained in the European Patent Office EDP file on
The European Patent Office is in no way liable for these particulars which are merely given for the purpose of information.

17-12-2024

| Patent document cited in search report | | Publication date | Patent family member(s) | | Publication date |
|---|---|---|---|---|---|
| CN 117218228 | A | 12-12-2023 | NONE | | |
| US 2023007835 | A1 | 12-01-2023 | EP | 4070267 A1 | 12-10-2022 |
| | | | GB | 2589643 A | 09-06-2021 |
| | | | GB | 2590519 A | 30-06-2021 |
| | | | US | 2023007835 A1 | 12-01-2023 |
| | | | WO | 2021111152 A1 | 10-06-2021 |

EPO FORM P0459

For more details about this annex : see Official Journal of the European Patent Office, No. 12/82